# EUROPÄISCHE PATENTSCHRIFT

(11) **EP 2 478 274 B1**
(45) Veröffentlichungstag und Bekanntmachung des Hinweises auf die Patenterteilung: **19.11.2014**
(21) Anmeldenummer: 10744562.9
(22) Anmeldetag: 12.08.2010
(51) Int. Cl.: F16H 63/38, F16H 59/70

(54) **SCHALTEINRICHTUNG**
SHIFTING UNIT
DISPOSITIF DE CHANGEMENT DE VITESSES

(30) Priorität: 17.09.2009 DE 102009041929
(43) Veröffentlichungstag der Anmeldung: 25.07.2012
(73) Patentinhaber: Schaeffler Technologies GmbH & Co. KG, 91074 Herzogenaurach (DE)
(72) Erfinder: IBERT, Lasse, 90409 Nürnberg (DE)
(86) Internationale Anmeldenummer: PCT/EP2010/061730
(87) Internationale Veröffentlichungsnummer: WO 2011/032788

(56) Entgegenhaltungen:
- EP-A1- 1 136 728
- WO-A1-2007/126376
- DE-A1-102006 028 788
- JP-U- 62 028 222
- US-A- 5 121 650
- US-A1- 2009 095 107

## Beschreibung

### Gebiet der Erfindung

Die Erfindung betrifft eine Schalteinrichtung für ein mehrgängiges Zahnräderwechselgetriebe eines Fahrzeugs mit einer linear bzw. axial verschiebbar geführten und arretierbaren Schaltstange.

### Hintergrund der Erfindung

Aus dem Stand der Technik sind unterschiedliche Lösungen zur Führung und Arretierung von in Zahnräderwechselgetrieben angeordneten Schalt- bzw. Maschinenelementen bekannt. DE 41 16 823 C2 zeigt eine axial verschiebbar und verdrehfest gelagerte Schaltwelle. Ihr ist eine Linearführung zugeordnet, die eine Vielzahl von über den Umfang der Schaltwelle angeordneten und auf dieser in Axialnuten geführten Wälzkörperkugeln aufweist, welchse außenseitig in einem Außenring geführt sind. Die auch als Kugellängsführung bezeichnete Einheit ist ortsfest - beispielsweise an der Getriebewandung - befestigt und ermöglicht eine Längsführung der Schaltwelle. Axial versetzt zu der Kugellängsführung ist der Schaltwelle eine separate Arretierung zugeordnet, die in örtliche Ausnehmungen der Schaltwelle zur Erzielung exakter Schaltpositionen verrastet. Die voneinander getrennte Anordnung der Wälzlagerung und der Arretierung erfordert einen erhöhten Montageaufwand und ist mit relativ großen Einbautoleranzen behaftet.

DE 101 43 360 A1 offenbart zur Lösung dieses Problems ein Schaltmodul, welches sowohl ein Wälzlager als auch eine Arretiereinrichtung einschließt. Das Wälzlager umfasst dabei Wälzkörper, die parallel zu einer Längsmittelebene bzw. Längsachse von mehreren Schaltstangen in einer rechteckförmigen Aufnahme eines Gehäuses angeordnet sind. In das Schaltmodul ist eine axial zu dem Wälzlager versetzt angeordnete Arretiereinheit mit mehreren Arretierungen integriert. Mehrere, in einer Ebene angeordnete Schaltstangen sind zentral in dem Schaltmodul gelagert bzw. geführt und in Schaltpositionen arretierbar. Dabei ist jeder Schaltstange eine separate Arretierung zugeordnet, was einen relativ großen Bauraum in radialer Richtung erfordert.

Eine weitere, eine Arretierung integrierende Schalteinrichtung ist in DE 40 20 160 A1 offenbart. Das Getriebegehäuse wird für die Arretierung mit einer Bohrung versehen, in die die Arretierung dann verpresst wird bzw. anderweitig eingesetzt ist. Diese Lösung erfordert das Einbringen zusätzlicher Bohrungen für die Arretierungen im Getriebegehäuse.

EP 1 136 728 A1 und WO 2007/126376 A1 zeigen gattungsgemäße Schalteinrichtungen mit Federn als Rastierelementen.

### Zusammenfassung der Erfindung

Aufgabe der vorliegenden Erfindung ist es, eine kompakte, einfach herstellbare und die Montage vereinfachende Schalteinrichtung zu schaffen.

Die Aufgabe durch eine Schalteinrichtung des Anspruchs 1 gelöst. Die Arretierung ist als eine durch die Lagereinheit geführte Feder ausgebildet. Die Feder stützt sich in der Lagereinheit ab und ist mit der Schaltstange verrastbar. Sie ist ein einfaches, relativ unaufwändig zu fertigendes, sehr flaches und somit Bauraum sparendes Maschinenteil. Die Feder kann vor der Komplettmontage der Schalteinrichtung zusammen mit der Lagereinheit vormontiert geliefert werden, wobei sie in dieser verliersicher gehalten ist. Durch die Integration der Feder als Arretierung in die Lagereinheit werden Toleranzen zwischen dem Lager und der Arretierung bei der Montage ausgeschlossen.

Die vollintegrierte Bauweise ermöglicht den Verzicht auf ein das Rastelement einer Arretierung führendes Arretiergehäuse, da sich die Feder als Rastelement an der Lagereinheit abstützt. Ebenso kann eine Rastkugel als mit der Rastkontur verrastendes, rundes Rastelement entfallen, da die Verrundung durch eine entsprechende Federform realisiert ist. Die Arretierung reduziert sich somit auf das Rastelement. Eine derartige Schalteinrichtung eignet sich insbesondere für automatisierte Schaltgetriebe, bei denen der Schaltvorgang durch einen Aktor realisiert wird und die Schalthaptik von nachrangiger Bedeutung ist.

Eine Schaltstange im Sinne der Erfindung ist ein linear verschiebbares oder verdrehbares Getriebeschaltelement. Je nach seiner Funktion wird sie als verdrehbare Schaltwelle oder als eine ausschließlich linear bewegliche Schaltschiene bezeichnet. Häufig weist die Schaltwelle eine zylindrische Bauform mit einem kreiszylindrischen oder rechteckigen Querschnitt auf.

Die Schaltstange ist mit einer Rastierkontur versehen. Die Rastierkontur ist beispielsweise in Form von Ausnehmungen oder Nuten in die Schaltstange eingebracht. Alternativ ist die Rastkontur auf einem separaten Bauteil angeordnet, das mit der Schaltstange verbunden ist.

In die Rastierkontur greift die Feder als Rastelement ein. Dazu ist es von Vorteil, wenn die Federform so gestaltet ist, dass bei Verschieben der Schaltstange keine sprunghaften Änderungen der Rastierkraft auftreten, um ein Verklemmen und somit eine Überlastung der Feder zu vermeiden. Die Feder ist durch die Lagereinheit abgestützt, so dass ihre räumliche Lage in der Schalteinrichtung im Wesentlichen fest ist. Sie ist durch die Lagereinheit geführt.

Die Schaltstange ist in der Lagereinheit in Bezug auf das Getriebegehäuse gelagert.

Aufgrund der Anforderungen an das Schaltgefühl und die aufzubringenden Schaltkräfte ist die Lagereinheit als Wälzlager ausgebildet. Es gewährleistet eine besonders reibungs- und damit verschleißarme Längsverschiebung des Getriebestellelements. Ein Radial-Linear-Wälzlager eignet sich sowohl für Dreh- als auch Verschiebebewegungen der Schaltstange. Ein Innenring ist meistens nicht erforderlich, da die Schaltstange in der Regel aus Stahl ausgebildet ist und ihre Außenoberfläche selbst die innere Lauffläche der Wälzkörper bilden kann.

Optional ist das Wälzlager als Adapter ausgebildet. Die Lagereinheit kann dazu eine die Schaltstange umschließende Hülse aufweisen, deren Innenoberfläche komplementär zur Außenkontur der Schaltstange gestaltet ist. Die Wälzkörper können in Taschen der Hülse angeordnet sein, die voneinander durch Stege beabstandet sind. Alternativ sind die Wälzkörper in einem Ringspalt angeordnet. Die Außenoberfläche der Hülse ist an die Form der Aufnahme im Getriebegehäuse angepasst. Sie kann gleichzeitig einen Adapter bilden, wenn sich die Form der Aufnahme und der Schaltstange voneinander unterscheiden. Vorteilhafterweise ermöglicht eine nichtsymmetrische Aufnahme eine verdrehsichere Montage. Als Material für die Hülse eignet sich Kunststoff, der gegebenenfalls metallarmiert ist.

Erfindungsgemäß weist die als Linearwälzlager ausgebildete Lagereinheit einen Lagerkäfig mit Taschen für die Wälzkörper auf. Zudem ist die Feder in den Lagerkäfig integriert. Der Außenring ist durch eine Hülse gebildet , in die parallel zur Längsachse der Schaltstange mehrere, in Umfangsrichtung zueinander versetzte Taschen eingeformt sind. Einige der Taschen sind als Durchgangsausnehmungen oder Nuten ausgebildet und dienen zur Aufnahme der Wälzkörper. Besonders geeignete Wälzkörper sind Kugelrollen, die gegenüber runden Wälzkörpern abgeflachte Pole aufweisen und somit Bauraum sparen.

Die Feder ist als ein Formfederelement ausgebildet. Vorzugsweise ist in der Schalteinrichtung nur eine Feder angeordnet, um die Montage möglichst einfach zu halten. In Versuchen hat sich herausgestellt, dass eine klammerartige Feder in Form eines Hufeisens einen besonders guten Kompromiss zwischen einfacher Montage, geringen Kosten und guter Arretierung darstellt. Eine derartige Feder weist einen gabelförmigen Zentralbereich auf und zwei Schenkel, die sich in Bezug auf die Schaltstange gegenüberliegen. Die Schenkel weisen jeweils einen Rastbereich auf, mit dem sie gegen die Rastkontur vorgespannt sind. Die Rastbereiche sind in einer Variante als in die Schenkel eingeformte Rastbögen realisiert.

Eine Feder mit symmetrisch angeordneten Schenkeln übt beim Schalten eine gleichmäßige Kraftverteilung auf die Schaltstange aus und zentriert sich in der Lagereinheit bzw. im Lagerkäfig selbst.

In einer Variante ist die Feder bezüglich der Schaltstange weder linear verschiebbar noch verdrehbar, so dass beim Bewegen der Schaltstange lediglich die Schenkel der Feder radial auf- oder einfedern. Dazu kann die Feder in einer Variante der Erfindung radial nach außen größtenteils formschlüssig durch den Außenring bzw. den Lagerkäfig abgestützt sein.

In einer weiteren Ausführung der Erfindung weist die Feder in ihrem Zentralbereich eine Ausnehmung zur Durchführung der Schaltstange auf. Die Lagereinheit bildet für die Schaltstange kein Sackloch, sondern eine Durchgangsausnehmung. Von Vorteil ist diese Ausführung, wenn sich die Lagereinheit am Getriebegehäuse abstützen und die Schaltstange von einem extern angeordneten Aktuator betätigt werden soll, wie es bei automatisierten Handschaltgetrieben erforderlich ist. Folglich braucht der Aktuator mit seinen elektrischen oder hydraulischen Anschlüssen nicht innerhalb des Getriebes angeordnet sein.

In einer weiteren Variante weist die Lagereinheit bzw. der Lagerkäfig eine Sensorik mit einem Signalgeber und einem Sensor zur Erfassung der Schaltstellung der Schaltstange auf. Durch die Integration der Sensorik in die Lagereinheit ist diese einerseits gut vor Verschmutzungen geschützt; gleichzeitig ist die Lagereinheit auf einfache Weise mit einem Stecker verbindbar, da die Stirnseite der Lagereinheit in der Regel von außerhalb des Getriebegehäuses zugänglich ist. Aufgrund der räumlichen Nähe der Sensorik zur Rastkontur sind zudem die auftretenden Toleranzen gering, was die Verwendung kostengünstiger Sensoren ermöglicht und eine Nachbearbeitung der Signale ggf. entbehrlich macht. Ferner werden durch diese Anordnung Montageungenauigkeiten bei der Positionierung des Sensors zu der Rastierkontur im Vorfeld ausgeschlossen.

Zur Positionsbestimmung der Schaltstange ist es nicht notwendig, ihre absolute Position zu kennen. Es ist ausreichend festzustellen, ob die Schaltstange sich ausgehend von einem Ausgangs- oder Bezugspunkt auf den Sensor zu- oder wegbewegt. Dazu kann ein Näherungssensor verwendet werden. Unter einem derartigen Näherungssensor versteht man insbesondere einen Sensor, der ein durch einen Störkörper als Signalgeber beeinflussbares Feld detektiert. Zweckmäßigerweise ist in diesem Fall der Störkörper die Schaltstange selbst. Das Sensorsignal ist abhängig von ihrer Relativlage zu dem Sensor.

Besonders vorteilhaft ist es, die Feder und die Sensorik in Umfangsrichtung versetzt zueinander anzuordnen, da so die Einflüsse des Federstahls auf den Sensor verringert sind.

In einer Weiterbildung der Erfindung ist die Lagereinheit aus mehreren, die Schaltstange radial umgebenden Lagersegmenten aufgebaut. Nachdem zwischen die Segmente die Feder eingesetzt ist, lassen sich die Lagersegmente fest miteinander - beispielsweise formschlüssig - verbinden. Die Feder kann auf einfache Weise auf einem ersten Lagersegment positioniert werden, idealerweise in einer an ihre Form angepassten Aufnahme. Anschließend werden die anderen Segmente mit dem ersten Lagersegment verbunden. Diese mehrteilige Bauweise ermöglicht, nur ein Lagersegment mit der Sensorik auszustatten und die anderen als einfache, kostengünstig herstellbare Formteile herzustellen. Je nach Materialwahl bietet sich zur Herstellung der Formteile beispielsweise Kaltumformen von Blech oder Kunststoffspritzen an.

Die Sensorikmontage kann ebenso einfach wie die der Feder erfolgen, indem die Sensorik in einer zu ihrem Außenumriss komplementären Sensorikaufnahme des zweiten Lagersegments angeordnet wird und anschließend mit den anderen Lagersegmenten verbunden wird.

### Kurze Beschreibung der Zeichnungen

Die Erfindung wird anhand von Ausführungsbeispielen näher erläutert. Es zeigen:
- Figur 1: einen Längsschnitt einer ersten erfindungsgemäßen Schalteinrichtung,
- Figur 2: einen Längsschnitt einer zweiten erfindungsgemäßen Schalteinrichtung,
- Figur 3: eine teilweise geschnittene Schrägansicht der Schalteinrichtung nach Figur 2,
- Figur 4: eine ungeschnittene Schrägansicht der Schalteinrichtung nach Figur 2,
- Figur 5: eine erfindungsgemäße Feder.

### Detaillierte Beschreibung der Zeichnungen

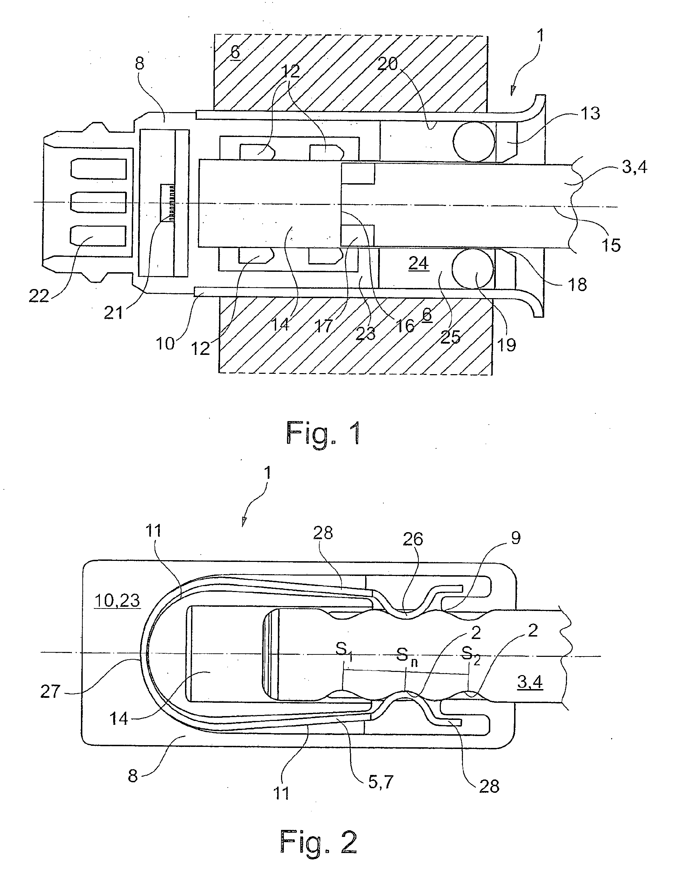

In Figur 1 ist eine Schalteinheit 1 zur Lagerung eines linear verschiebbaren Getriebestellelements 3 dargestellt. Die Schalteinheit 1 ist in einem Schaltgetriebegehäuse 6 eines Kraftfahrzeugs angeordnet. Sie umfasst eine Schaltstange 4 als das Getriebestellelement 3 und eine Lagereinheit 8.

Die Schaltstange 4 ist mit einem axialen Ende 16 in der Lagereinheit 8 gelagert. Das in Fig. 1 nicht sichtbare zweite axiale Ende der Schaltstange 4 ist in einer weiteren, nicht notwendigerweise gleichartigen Lagereinheit gelagert.

Die Lagereinheit 8 weist eine Lagerhülse 10 auf, an deren innerer Mantelfläche 20 sich Wälzkörper 19 in axialer Richtung der Schaltstange 4 abwälzen. Die Lagerhülse 10 ist zylindrisch und metallisch, wobei ihre innere Mantelfläche 20 gehärtet ist. Die Lagerhülse 10 umgreift formschlüssig ein Formteil 23 aus Kunststoff, das die Schaltstange 4 führt. Zwischen der Schaltstange 4 und der Lagerhülse 10 sind die Wälzkörper 19 in Form von Kugelrollen so angeordnet, dass sie auf dem Außenumfang der Schaltstange 4 und der Mantelfläche 20 in in Umfangsrichtung zueinander versetzten Führungskanälen 24 abrollen. In dem Ausführungsbeispiel ist genau ein Wälzkörper 19 je Führungskanal 24 vorgesehen. Eine bessere Führung wird mit einem Satz Wälzkörper je Führungskanal erreicht, was allerdings die Baulänge bei vorgegebener Schaltstangenverschiebung erhöht. Die Führungskanäle 24 sind voneinander in Umfangsrichtung durch Stege 25 des Formteils 23 getrennt. Somit bildet das Formteil 23 einen Lagerkäfig, in dem die Wälzkörper 19 axial geführt sind. Im Schaltbetrieb ist die Schaltstange 4 zumindest durch die Stege 25 verkippsicher geführt. Die axiale Verschiebbarkeit der Wälzkörper 19 ist durch einen Axialanschlag 13 begrenzt.

Die Schaltstange 4 ist in dem Formteil 23 durch ein Sackloch 14 aufgenommen. Bei der Montage der Schalteinheit 1 kann die Schaltstange 4 aufgrund von an den Axialanschlägen 13 angeordneten Zentrierschrägen 18 leicht in das Sackloch 14 der Lagereinheit 8 eingeführt werden. Die so gebildete Schalteinheit 1 kann als vormontiertes Modul zur Getriebemontage angeliefert werden.

Bei einem Schaltvorgang wird die Schaltstange 4 entlang ihrer Längsachse 15 zwischen drei axial benachbarten Positionen s₁, sₙ, s₂ verschoben (Figur 2). Dabei entspricht die mittlere Position der Neutralposition sₙ. Die beiden anderen Positionen s₁, s₂ sind Schaltpositionen, denen jeweils ein Gang zugeordnet ist. Gleichzeitig mit der Schaltstange 4 wird eine daran befestigte, in den Figuren nicht dargestellte Schaltgabel verschoben. Zum Schalten eines Ganges wird die Schaltstange 4 in dem Schaltgetriebe aus der Neutralposition sₙ heraus in eine Schaltposition bewegt. Dabei erfolgt über die Schaltgabel eine Verschiebung einer nicht dargestellten Schaltmuffe und damit die Schaltung des zur Bildung der entsprechenden Übersetzungsstufe erforderlichen, ebenfalls nicht dargestellten Zahnradsatzes.

Im Formteil 23 sind axial versetzt zu den Führungskanälen 24 Sensoren 12 angeordnet, die mit am axialen Ende 16 der Schaltstange 4 angeordneten Signalgebern 17 wechselwirken. Das erzeugte Sensorsignal wird von einem Signalnehmer 21 abgegriffen, gegebenenfalls weiterverarbeitet und über einen Steckkontakt 22 zu einer nicht dargestellten Auswerteeinheit des Schaltgetriebes des Kraftfahrzeugs geleitet.

Der mit der Neutralposition sₙ der Schaltstange 4 korrelierte Messwert wird als Bezugswert gewählt, um die Anordnung zu kalibrieren. Die Montage ist dadurch vereinfacht, dass aufgrund des anschließenden Kalibrierprozesses Abweichungen von der exakten Einbaulage des Sensors 12 und der Schaltstange 4 sowie Schwankungen in der Sensorgüte ausgeglichen werden können.

Die Rastausnehmungen der Schaltstange 4 sowie die Feder 7 als Rastelement 5 sind in dem gewählten Schnitt der Fig. 1 nicht dargestellt. Sie sind aber ähnlich wie in Fig. 2 realisiert. Die Schaltstange 4 weist in einem 90° versetztem Längsschnitt mehrere Rastausnehmungen 2 auf, die zusammen eine Rastkontur 9 für das Rastelement 5 bilden. In die Rastausnehmungen 2 greift die Feder 7 mit ihren Rastbereichen 26 ein.

In der Ausbildung der Schalteinheit nach Figur 2 weist die Feder 7 eine Hufeisenform auf mit einer Basis 27 und zwei Schenkeln 28, die sich bezüglich der Schaltstange 4 gegenüberliegen, auf. Der Abstand der Schenkel 28 voneinander sowie die Breite der Schenkel 28 vergrößert sich zur Basis 27 hin, wobei die Materialdicke der Feder 7 gleichbleibend ist. Die Rastbereiche 26 sind endseitig an den Schenkeln 28 angeordnet und verrundet ausgebildet, damit sie auch bei Missbrauchskräften nicht verklemmen.

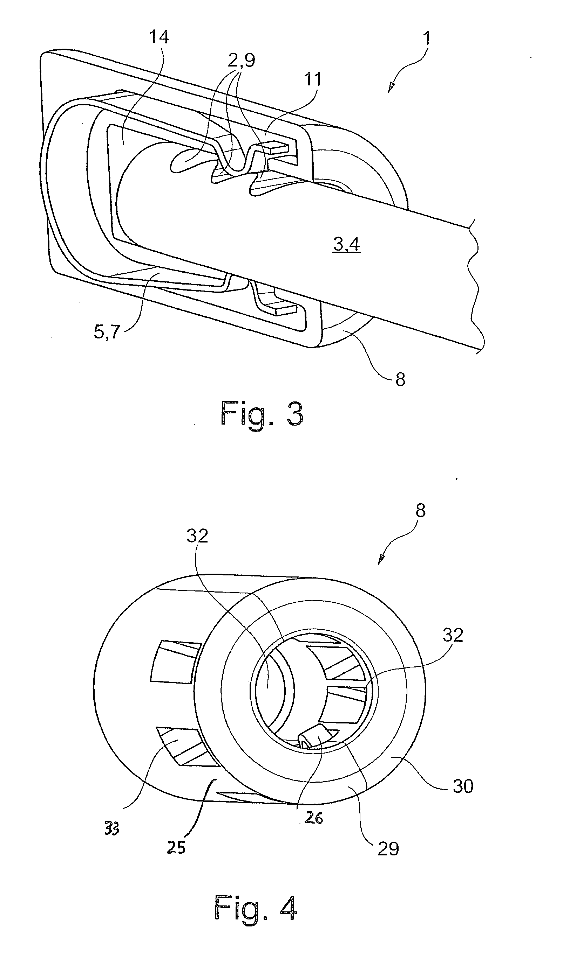

Im Gegensatz zur Ausführungsform der Fig. 1 weist die Lagereinheit 8 keine separate Lagerhülse 10 auf, sondern das Formteil 23 bildet selbst die Lagerhülse 10. In das Formteil 23 ist eine Nut 11 zur Aufnahme der Feder 7 eingebracht, wobei die Breite der Nut an der Basis 27 nur wenig breiter als die Feder 7 ist und schenkelseitig entsprechend dem zulässigen Federweg aufweitet. Damit ist sichergestellt, dass die Feder 7 stets optimal geführt ist und nicht verkippen kann. Die Lagereinheit 8 weist zwei Lagersegmente 29, 30 (Figuren 3, 4) auf, die formschlüssig miteinander verbindbar sind. Vor dem Zusammenbau der Lagersegmente 29, 30 wird die Feder 7 in oder auf eines der Lagersegmente 29, 30 positioniert und ist nach dem Zusammenbau verliersicher gehalten.

Figur 4 zeigt eine Lagereinheit 8 aus zwei Lagersegmenten 29, 30, die an beiden axialen Stirnflächen Öffnungen 32 für die Schaltstange 4 aufweist, so dass die Schaltstange 4 durch einen außerhalb des Getriebegehäuses anordbaren Aktuator betätigbar ist. Die Lagereinheit ist mit Taschen 33 zur Aufnahme der Wälzkörper 19 in Form von Kugeln versehen. Die Lagereinheit weist eine kompakte, kreiszylindrische Außenkontur auf.

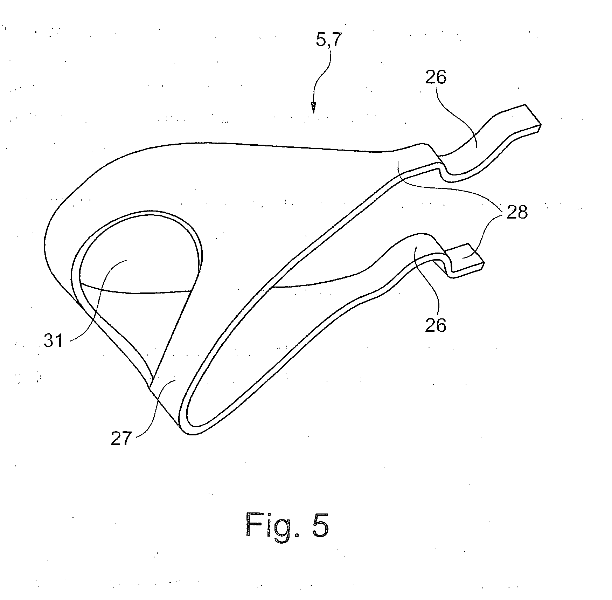

Figur 5 zeigt eine Feder 7, die für eine Lagereinheit 8 nach Figur 4 geeignet ist, wenn die Schaltstange 4 nicht endseitig gelagert werden soll. Die Basis 27 der Feder 7 weist eine Durchgangsausnehmung 31 auf, die in Größe und Form so ausgebildet ist, dass die Schaltstange 4 durch sie hindurch geschoben werden kann, wenn die Feder 7 stirnseitig zur Schaltstange 4 angeordnet ist.

### Liste der Bezugszahlen

- 1: Schalteinheit
- 2: Rastausnehmung
- 3: Getriebestellelement
- 4: Schaltstange
- 5: Rastelement
- 6: Getriebegehäuse
- 7: Feder
- 8: Lagereinheit
- 9: Rastkontur
- 10: Lagerhülse
- 11: Nut
- 12: Sensor
- 13: Axialanschlag
- 14: Sackloch
- 15: Längsachse
- 16: axiales Ende
- 17: Signalgeber
- 18: Zentrierschräge
- 19: Wälzkörper
- 20: innere Mantelfläche
- 21: Signalnehmer
- 22: Signalausgang
- 23: Formteil
- 24: Führungskanal
- 25: Steg
- 26: Rastbereich
- 27: Basis
- 28: Schenkel
- 29: Lagersegment
- 30: Lagersegment
- 31: Durchgangsausnehmung
- 32: Öffnung
- 33: Tasche

- l: Längsrichtung
- s₁: erste Schaltstellung
- sₙ: Neutralstellung
- s₂: zweite Schaltstellung

## Patentansprüche

1. Schalteinrichtung (1) für ein Zahnräderwechselgetriebe, aufweisend
- eine Schaltstange (4) mit einer Rastkontur (9),
- eine Lagereinheit (8), über die die Schaltstange (4) in einem Gehäuse (6) gelagert wird,
- ein Rastelement (5), das in der Lagereinheit (8) angeordnet und mit der Rastkontur (9) verrastbar ist,
- wobei das Rastelement (5) als eine durch die Lagereinheit (8) geführte Feder (7) ausgebildet ist, **dadurch gekennzeichnet, dass**
- die Lagereinheit (8) als ein Wälzlager mit Wälzkörpern (19) ausgebildet ist
- und einen Lagerkäfig (10, 23) mit Taschen (33) zur Aufnahme der Wälzkörper (19) und mit einer Nut (11) zur Aufnahme der Feder (7) aufweist.

2. Schalteinrichtung nach Anspruch 1, **dadurch gekennzeichnet, dass** die Feder (7) durch den Lagerkäfig (10, 23) in Verschieberichtung der Schaltstange (4) fixiert ist.

3. Schalteinrichtung nach Anspruch 1 oder 2, **dadurch gekennzeichnet, dass** der Lagerkäfig (10, 23) mehrteilig aufgebaut ist.

4. Schalteinrichtung nach Anspruch 3, **dadurch gekennzeichnet, dass** der Lagerkäfig (10) zweiteilig aufgebaut ist, wobei beide Lagersegmente (29, 30) des Lagerkäfigs (10, 23) etwa halbschalenförmig ausgebildet sind.

5. Schalteinrichtung nach Anspruch 3, **dadurch gekennzeichnet, dass** die Lagereinheit (8) eine Sensorik (12) aufweist.

6. Schalteinrichtung nach einem der vorhergehenden Ansprüche, **dadurch gekennzeichnet, dass** die Feder (7) als eine klammerartige Formfeder ausgebildet ist.

7. Schalteinrichtung nach Anspruch 6, **dadurch gekennzeichnet, dass** die Formfeder hufeisenförmig mit einer Basis (27) und zwei sich in Bezug auf die Schaltstange (4) gegenüberliegenden und diese umgreifenden Schenkeln (28) ausgebildet ist.

8. Schalteinrichtung nach Anspruch 6 oder 7, **dadurch gekennzeichnet, dass** die Formfeder stirnseitig zur Schaltstange (4) eine Ausnehmung (31) aufweist, durch die die Schaltstange (4) hindurch führbar ist.

## Claims

1. Shifting unit (1) for gearwheel-type change gear, having
- a shift rod (4) with a latching contour (9),
- a bearing unit (8), via which the shift rod (4) is mounted in a housing (6),
- a latching element (5) which is arranged in the bearing unit (8) and can be latched with the latching contour (9),
- the latching element (5) being designed as a spring (7) guided by the bearing unit (8), **characterized in that**
- the bearing unit (8) is designed as a rolling bearing with rolling bodies (19),
- and has a bearing cage (10, 23) with pockets (33) for receiving the rolling bodies (19) and with a groove (11) for receiving the spring (7).

2. Shifting unit according to Claim 1, **characterized in that** the spring (7) is fixed in the direction of displacement of the shift rod (4) by the bearing cage (10, 23).

3. Shifting unit according to Claim 1 or 2, **characterized in that** the bearing cage (10, 23) is of multi-part construction.

4. Shifting unit according to Claim 3, **characterized in that in that** the bearing cage (10) is of two-part construction, the two bearing segments (29, 30) of the bearing cage (10, 23) being designed approximately in the form of a half-shell.

5. Shifting unit according to Claim 3, **characterized in that** the bearing unit (8) has sensor technology (12).

6. Shifting unit according to one of the preceding claims, **characterized in that** the spring (7) is designed as a clip-like shaped spring.

7. Shifting unit according to Claim 6, **characterized in that** the shaped spring is designed in the form of a horseshoe with a base (27) and with two legs (28) lying opposite one another with respect to the shift rod (4) and surrounding the latter.

8. Shifting unit according to Claim 6 or 7, **characterized in that** the shaped spring has, on the end face towards the shift rod (4), a recess (31), through which the shift rod (4) can be led.

## Revendications

1. Dispositif de changement de vitesses (1) pour une boîte de vitesses à engrenages, comprenant
- une tringle de changement de vitesses (4) présentant un contour d'encliquetage (9),
- une unité de palier (8), par le biais de laquelle la tringle de changement de vitesses (4) est montée dans un boîtier (6),
- un élément d'encliquetage (5) qui est disposé dans l'unité de palier (8) et peut être encliqueté avec le contour d'encliquetage (9),
- l'élément d'encliquetage (5) étant réalisé sous forme de ressort (7) guidé à travers l'unité de palier (8), **caractérisé en ce que**
- l'unité de palier (8) est réalisée sous forme de palier à roulement comprenant des corps de roulement (19)
- et comprend une cage de palier (10, 23) pourvue de cavités (33) pour recevoir les corps de roulement (19) et pourvue d'une rainure (11) pour recevoir le ressort (7).

2. Dispositif de changement de vitesses selon la revendication 1, **caractérisé en ce que** le ressort (7) est fixé à travers la cage de palier (10, 23) dans la direction de déplacement de la tringle de changement de vitesses (4).

3. Dispositif de changement de vitesses selon la revendication 1 ou 2, **caractérisé en ce que** la cage de palier (10, 23) est construite en plusieurs parties.

4. Dispositif de changement de vitesses selon la revendication 3, **caractérisé en ce que** la cage de palier (10) est construite en deux parties, les deux segments de paliers (29, 30) de la cage de palier (10, 23) étant réalisés approximativement en forme de demi-coques.

5. Dispositif de changement de vitesses selon la revendication 3, **caractérisé en ce que** l'unité de palier (8) comprend un système de capteurs (12).

6. Dispositif de changement de vitesses selon l'une quelconque des revendications précédentes, **caractérisé en ce que** le ressort (7) est réalisé sous forme de ressort façonné de type pince.

7. Dispositif de changement de vitesses selon la revendication 6, **caractérisé en ce que** le ressort façonné est réalisé en forme de fer à cheval avec une base (27) et deux branches (28) opposées par rapport à la tringle de changement de vitesses (4) et venant en prise autour de celle-ci.

8. Dispositif de changement de vitesses selon la revendication 6 ou 7, **caractérisé en ce que** le ressort façonné présente, du côté frontal en direction de la tringle de changement de vitesses (4), un évidement (31) à travers lequel la tringle de changement de vitesses (4) peut être guidée.
